Europäisches Patentamt

European Patent Office

Office européen des brevets

(19)

(11) Veröffentlichungsnummer: **0 355 844**
**A2**

(12) **EUROPÄISCHE PATENTANMELDUNG**

(21) Anmeldenummer: 89115714.1

(51) Int. Cl.4: **F02D 1/04** , **G05D 13/16**

(22) Anmeldetag: 25.08.89

(30) Priorität: 25.08.88 DE 3828772

(43) Veröffentlichungstag der Anmeldung:
28.02.90 Patentblatt 90/09

(84) Benannte Vertragsstaaten:
DE FR GB IT

(71) Anmelder: **Klöckner-Humboldt-Deutz**
**Aktiengesellschaft**
**Deutz-Mülheimer-Strasse 111 Postfach 80 05**
**09**
**D-5000 Köln 80(DE)**

(72) Erfinder: **Krause, Horst Herbert, Dr.**
**Wollreffenweg 125**
**D-7110 Öhringen(DE)**
Erfinder: **Strusch, Wolfgang**
**Friedenstrasse 110**
**D-5000 Köln 90(DE)**
Erfinder: **Lemme, Werner**
**Im Hof 38**
**D-5064 Rösrath 1(DE)**

(54) Mechanischer Drehzahlregler für eine Brennkraftmaschine mit einem auf Gewichts- und Arbeitsvermögen optimierten Messwerk.

(57) Bei einem mechanischen Drehzahlregler ist es wichtig, daß die sich bewegenden Massen, insbesondere die des Meßwerks, ein geringes Gewicht aufweisen.

Gewichtsoptimierte Reglermuffen zeigen häufig die Nachteile, daß die Fliehgewichte entweder sehr nahe an die Drehachse kommen, oder daß die Fliehgewichte durch besondere Maßnahmen an der Muffe gestützt werden müssen.

Die Reglermuffe wird als dünnwandiges Konstruktionsteil hergestellt, das mit Fliehgewichten kombiniert ist, welche Abstandshalter aufweisen, um aus dem zur Verfügung stehenden Bauraum das optimale Arbeitsvermögen zu nutzen und ein Hineinklappen und Verhaken in die Reglermuffe zu vermeiden.

Fig. 1

## Mechanischer Drehzahlregler für eine Brennkraftmaschine mit einem auf Gewichts- und Arbeitsvermögen optimierten Meßwerk

Die Erfindung betrifft einen mechanischen Drehzahlregler nach dem Oberbegriff des Anspruchs 1.

Bei einem mechanischen Drehzahlregler wandelt ein Meßwerk das Drehzahlsignal in ein Wegsignal um, welches auf die Einspritzpumpe übertragen wird, um die Einspritzmenge entsprechend zu regulieren.

Dabei ist es wichtig, daß die sich bewegenden Massen des Reglers, insbesondere die des Meßwerks (Reglermuffe und Fliehgewichte) ein geringes Gewicht aufweisen, um ein gutes Regelverhalten, auch bei Motorschräglagen, zu erzielen.

Fernerhin sollte der zur Verfügung stehende Bauraum innerhalb des Reglergehäuses für das Arbeitsvermögen bzw. für die Regelgüte optimal genutzt werden, d.h. Fliehgewichtsmasse gewichtsoptimiert mit möglichst weit außen liegendem Schwerpunkt von der Drehachse des Wellenzapfens des Reglers.

Gewichtsoptimierte Reglermuffen zeigen häufig den Nachteil, daß die Fliehgewichte entweder sehr nahe an der Drehachse angeordnet sind und somit ein relativ kleines Arbeitsvermögen darstellen, oder daß die Fliehgewichte durch besondere Stützmaßnahmen an der Muffe an einem Verhaken derselben mit der innersten Fliehgewichtsstellung gehindert werden, was einen zusätzlichen Raum und Mehrgewicht bedeutet.

Eine Erhöhung des Arbeitsvermögens durch Vergrößerung der Fliehgewichte erfordert eine unerwünschte Raumvergrößerung, und die Fliehgewichte zeigen im Betriebszustand entsprechend ihrer Masse ein größeres Beharrungsvermögen, wodurch die Regelstange relativ zum Motor schwingt und die Regelgüte beeinträchtigt wird.

Der Erfindung liegt die Aufgabe zugrunde, durch einfache konstruktive Gestaltungsmaßnahmen, einen raumsparenden mechanischen Regler herzustellen, dessen Meßwerk funktionssicher auf Gewichts- und Arbeitsvermögen optimierten Aufbau ausgelegt ist.

Erfindungsgemäß wird die Aufgabe durch die kennzeichnenden Merkmale des ersten Anspruchs gelöst.

Die Reglermuffe besteht aus einem dünnwandigen Konstruktionsteil, das mit Fliehgewichten kombiniert ist, welche Abstandshalter aufweisen, um aus dem zur Verfügung stehenden Bauraum das optimale Arbeitsvermögen herauszuholen. Die Abstandshalter sind so ausgelegt, daß sie einem Verhaken zwischen Fliehgewichten und Reglermuffe vorbeugen und bei möglichst kleiner Masse einen möglichst weit außen liegenden Schwerpunkt bei den Fliehgewichten ermöglichen.

Die Reglermuffe weist an den Enden ihres Schiebesitzes umlaufende Eindrehungen auf, die das Eindringen von Fremdkörpern und somit ein Klemmen der Reglermuffe vorbeugend verhindern.

Der Einfachheit halber kann die Reglermuffe als dünnwandige Konstruktion aus einteiligem Blechteil hergestellt werden. Ebenso kann dieser aus zwei oder mehr zusammengesetzten Bauteilen hergestellt werden, die durch Löten, Schweißen oder Umformen miteinander verbunden sind.

Entsprechend den unterschiedlichen Belastungen auf der Reglermuffe können die dafür verwendeten Bauteile aus verschiedenen Werkstoffen ausgesucht werden. Auf der schwach belasteten Seite kann z. B. ein Sinterteil eingesetzt und auf der höher belasteten Seite ein Teil aus härtbarem Stahl eingebaut werden.

Eine Variante der Erfindung sieht vor, bei Einsatz von Fliehgewichten mit gebogenen Enden die Reglermuffe mit einem Abstandshalter aus Kunststoff zu versehen, der als Auflagefläche für die Fliehgewichte in der Stillstandslage dient, was zu einer definierten Fliehgewichtslage im Stillstand führt und ein Verhaken der Fliehgewichte mit der Muffe verhindert.

Gemäß Anspruch 6 besteht das Fliehgewicht zur besseren Montierbarkeit auf dem Fliehgewichtsträger, aus einem Bauteil mit einem zusätzlichen federnden Element, welches den Lagerstift im eingebauten Zustand auf der nicht belasteten Seite umschließt. Ebenso kann auf dem Fliehgewicht eine Buchse zur Aufnahme des Lagerstiftes befestigt werden.

In einer weiteren erfindungsmäßigen Variante besteht das Fliehgewicht aus zwei Blech- und/oder Kunststoffteilen, die miteinander fest verbunden sind, und so geformt sind, daß dazwischen eine Lagerstelle zur Aufnahme des Lagerstiftes entsteht.

Ebenso kann das Fliehgewicht aus einem leicht verformbaren Blechteil hergestellt werden, worin eine Lagerstelle zur Aufnahme des Lagerstiftes abwechselnd eingearbeitet ist. Je nach Belastung kann bei den vorher genannten Varianten die Lagerstelle mit oder ohne Laufbuchse sein.

Zur weiteren Erläuterung der Erfindung wird auf die Zeichnungen verwiesen, in der bevorzugte Ausführungsbeispiele der Erfindung vereinfacht dargestellt sind.

Es zeigt:

Fig. 1: Einen Querschnitt durch einen mechanischen Drehzahlregler mit den erfindungswesentlichen Bauteilen des ersten Ausführungsbeispiels

Fig. 2: Einen Querschnitt durch verschiedene Ausführungen des Fliehgewichtes mit Abstandshalter sowie Varianten der Reglermuffe mit Kunststoffteil als Abstandshalter für das zweite Ausführungsbeispiel

Fig.: 3 Darstellung von verschiedenen Fliehgewichtsausführungen mit gebogenen Enden für das zweite Ausführungsbeispiel.

Fig.: 4 Einbaubeispiele der Fliehgewichte im Fliehgewichtsträger

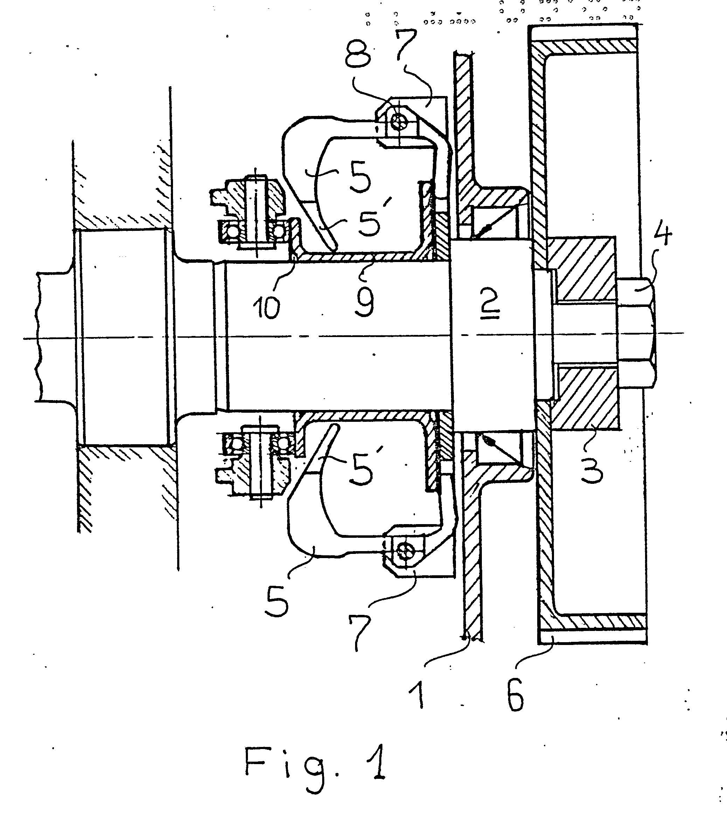

Das erste Ausführungsbeispiel (Fig. 1) zeigt einen Abschnitt des Gehäuses 1 eines mechanischen Drehzahlreglers mit dem Verlängerungsteil 2 der Nockenwelle der Einspritzpumpe (nicht dargestellt). Eine in der Ebene der Nockenwellenachse angeordnete Sechskantschraube 4 verspannt den Verlängerungsteil 2 mit der Nockenwelle. Durch die Scheibe 3 ist die Antriebsscheibe 6 der Einspritzpumpe verspannt.

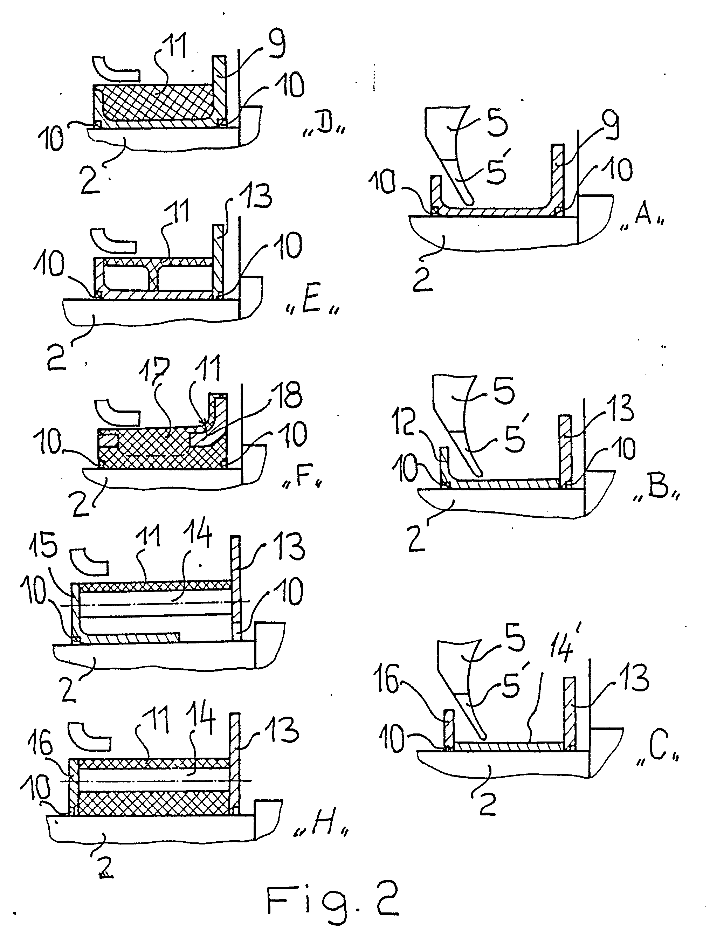

Auf dem Verlängerungsteil 2 ist die axial verschiebbare Muffe 9 montiert. Der Fliehgewichtsträger 7 weist Lagerstifte 8 auf, die jeweils zur Aufnahme eines Fliehgewichtes 5 dienen. Die Reglermuffe 9 (Variante A in Fig. 2, rechts) besteht aus einem dünnwandigen Konstruktionsteil, das durch die Bewegung der Fliehgewichte auf den Verlängerungsteil 2 verschoben wird und über ein Hebelwerk (hier nicht dargestellt) die Regelstange der Einspritzpumpe bewegt.

Ein Abstandshalter 5' ist mit dem Fliehgewicht 5 integriert, um ein Hineinklappen oder Verhaken des Fliehgewichtes in die Reglermuffe zu verhindern.

Damit ist es möglich, die Fliehgewichtslagerung so weit wie möglich nach außen zu verschieben und gleichzeitig sicher aus dem zur Verfügung stehenden Bauraum das optimale Arbeitsvermögen zu nutzen. Die Reglermuffe 9 ist an den Enden ihres Schiebesitzes mit Eindrehungen 10 versehen, die das Eindringen von Fremdkörpern und somit Einklemmen der Reglermuffe auf den Verlängerungsteil 2 verhindern.

Die Reglermuffe kann auch aus mehreren Teilen hergestellt werden. Bei Variante B (Fig. 2, rechts) ist der höher belastete Schulterteil 13 aus Stahl, während Teil 12 aus Sintermetall oder aus Blech hergestellt werden kann. Bei Variante C (Fig. 2, rechts) besteht die Reglermuffe aus einem dünnwandigen, achsparallelen Basiskörper 14', mit je einer Scheibe an den beiden Enden 13, 16. Dies ermöglicht, für den Schulterteil 13 einen harten Werkstoff auszusuchen und bei dem Basiskörper 14 einen Werkstoff mit guten Laufeigenschaften einzusetzen. Darüber hinaus können durch Änderung der Basiskörperlänge Muffen verschiedener Breiten hergestellt werden.

Figur 2 zeigt links im Bild ein zweites Ausführungsbeispiel des Meßwerkes, wobei die Reglermuffe mit einem Kunststoffteil als Abstandshalter kombiniert und zusammen mit einem am Ende gebogenen Fliehgewicht eingesetzt ist.

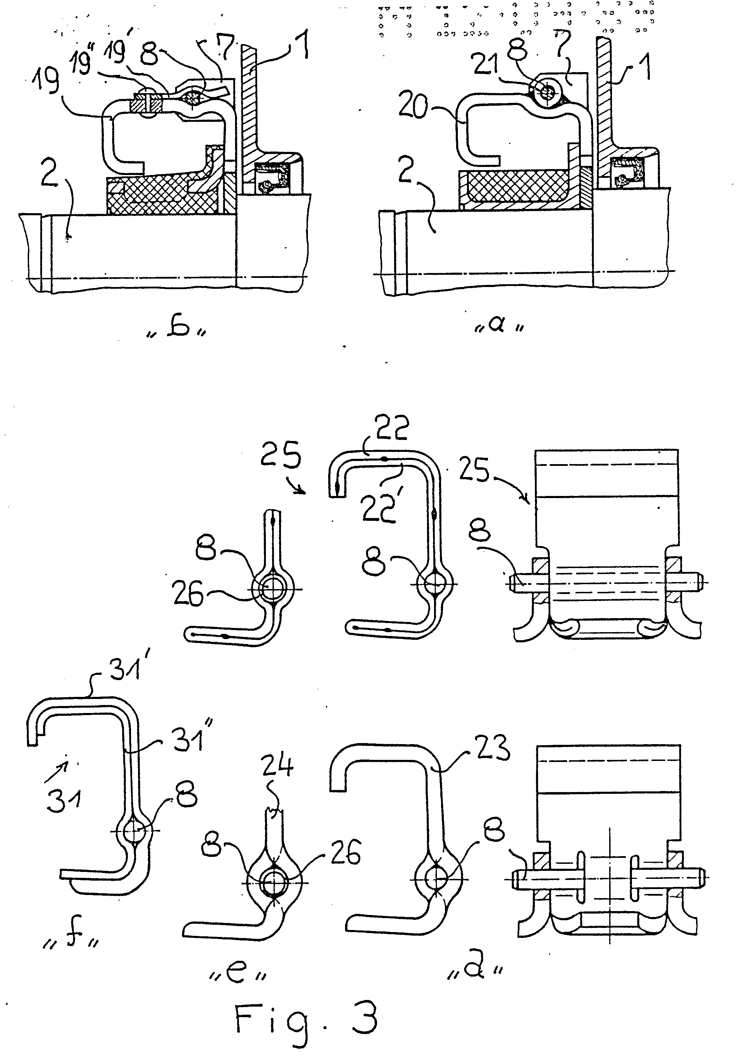

Die in D gezeigte Reglermuffe entspricht der Variante A bei Figur 2 und ist mit einem Kunststoffteil 11 aufgefüllt bzw. umspritzt. Variante E entspricht dem Basiskörper der Variante B, der ebenfalls mit einem Kunststoffteil 11 aufgefüllt oder umgespritzt ist. Die Stirnseiten sind ebenfalls mit Eindrehungen 10 versehen. Das Füllstück 11 aus Kunststoff kann als fertiges Teil darin angebracht werden und dient, so wie die umspritzte Ummantelung, als Stütze für das Fliehgewicht, mit dem gebogenen Endteil, dessen Varianten in Figur 3 beschrieben werden.

Die Reglermuffe unter F besteht aus einem mit Kunststoffmasse umspritzten Stahlteil 18, das aus Gewichtsgründen rundum mit Löchern 17 versehen ist. Die Kunststoffmasse gleitet direkt auf der Wellenverlängerung 2 und ist beiderseitig an ihrem Schiebesitz mit Eindrehungen 10 versehen.

Bei den Ausführungen G und H werden die zwei gegenüberliegenden Schulterteile 13, 15 und 13, 16 durch den Teil 14 miteinander auf der gewünschten Reglermuffenbreite verbunden, und der Abstand bis zu der Liegefläche der Fliehgewichte, die sich dort im Stillstand anlegen, durch eine Kunststoffmasse 11 hergestellt. Je nach Gestaltung der Schulter 15 oder 16 kann die Reglermuffe auf der Kunststoffmasse 11 (Ausführung G) oder auch dem metallischen Teil 16 gleiten (Ausführung H). Die Reglermuffen können entsprechend der unterschiedlichen Belastungen aus verschiedenen Werkstoffen zusammengesetzt werden, so daß der höherbelastete Schulterteil 13 z. B. aus härtbarem Stahl hergestellt werden kann.

Figur 3 zeigt die Fliehgewichtsvarianten mit dem gebogenen Endteil für das zweite Ausführungsbeispiel, wobei die unter "a" geführte Variante ein Fliehgewicht darstellt, das einstückig aus einem Blechteil 20 hergestellt ist, auf dem eine Buchse 21 zur Aufnahme des Lagerstiftes 8 geschweißt ist.

Zur besseren Montierbarkeit auf dem fertigen Fliehgewichtsträger ist die Variante "b" vorgesehen. Auf dem Fliehgewicht 19 ist ein federndes Element 19' befestigt, welches den Lagerbolzen 8 im eingebauten Zustand auf der nicht belasteten Seite umschließt. Dabei ist die als Lagerschale wirkende Seite des Fliehgewichtes geprägt oder bei einem Sinterfliehgewicht direkt mitgesintert. Das federnde Element 19' ist auf dem Fliehgewicht 19'' vernietet, kann aber auch mit einer Schraube oder dgl. darauf befestigt werden.

Bei der Variante "c" oder "f" ist das Fliehgewicht 25 bzw. 31 aus Blech oder Kunststoff in Sandwich-Bauweise hergestellt. Eine zylindrische Lagerstelle ist dazwischen zur Aufnahme des Lagerstiftes 8 vorgesehen, worauf das Fliehgewicht montiert wird. Je nach Belastung kann darin eine Lagerbuchse 26 eingesetzt werden. Das Fliehgewicht kann aus einem Blech, welches durch Umformen in seine doppelte Lage gebracht wird, hergestellt, oder aus zwei Hälften 22 und 22′ bzw. 31′ und 31″ zusammengesetzt, die miteinander durch Punktschweißen, Nieten oder Einbördeln befestigt sind, oder z. B. als Kunststoffteil durch Klipse verbunden werden. Bei Variante "f" werden die Bestandteile des Fliehgewichtes 31′ und 31″ durch axiales Fugen miteinander verbunden und anschließend befestigt.

Die Variante "d" stellt ein Fliehgewicht 23 dar, welches aus einem leicht verformbaren Werkstoff hergestellt ist und eine Lagerstelle aufweist, die in das Blech abwechselnd eingearbeitet ist, die auch je nach Einsatz mit einem Lagerkörper 26 bestückt werden kann.

Bei Variante "e" besteht das Fliehgewicht 24 aus Sinterteil, worin eine Lagerstelle, mit oder ohne Laufbuchse, zur Aufnahme des Lagerstiftes 8 vorgesehen ist.

Die vorhin beschriebenen Bauteile des Meßwerkes, Reglermuffe und Fliehgewichte, sind alle auf Gewichts- und Arbeitsvermögen optimierenden Aufbau ausgelegt.

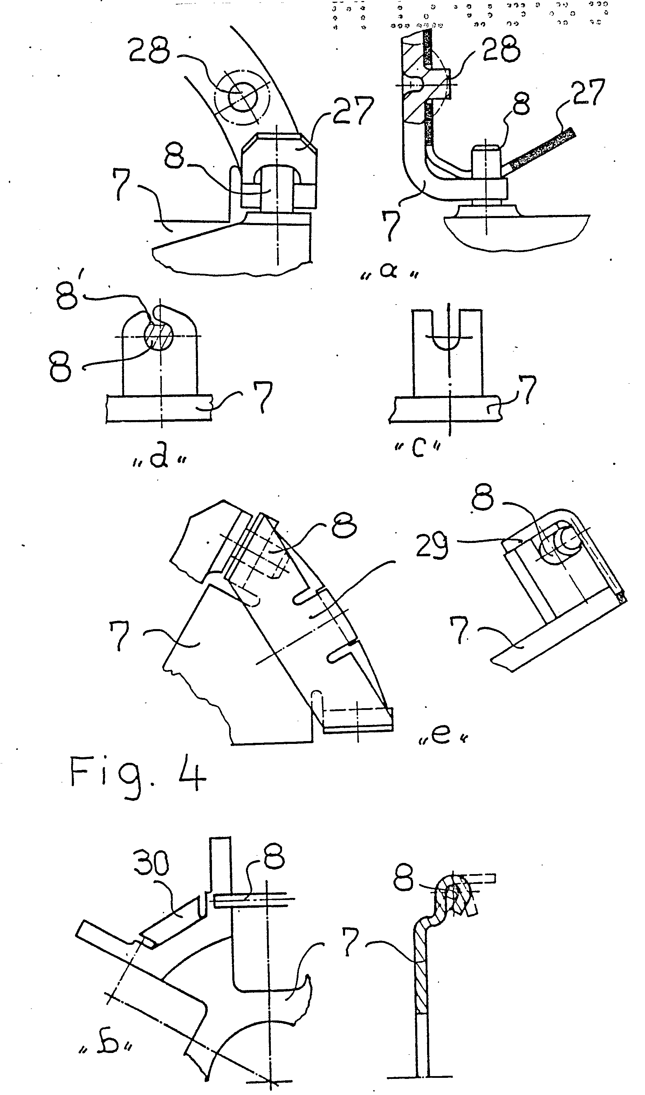

Figur 4 zeigt Einbaubeispiele der erfindungsgemäßen Fliehgewichte im Fliehgewichtsträger.

Bei der Variante "a" werden die in die Laschen des Fliehgewichtsträgers eingeführten Lagerstifte durch ein Federelement 27 in ihrer Lage fest gehalten werden. Das Federelement ist auf einen Dorn 28 auf dem Fliehgewichtsträger aufgesetzt und nimmt beide benachbarten Enden der Lagerstifte auf.

Variante "b" sieht als Befestigungsteil eine hochgestellte Nase 30 vor, die zwischen zwei benachbarten Fliehgewichten liegt, und die jeweiligen Lagerstiftenden in ihrer Lage seitlich festhält.

Zur Montageerleichterung können die Laschen des Fliehgewichtsträgers einseitig offen gestaltet werden (Variante c, d und e).

Variante "d" zeigt eine Ausführung, wo die Enden der Laschen durch Verformen auf die Enden der Lagerstifte 8 gedrückt werden und diese in ihrer Lage festhalten. Die darunter liegenden Enden 8′ der Lagerstifte sind abgeflacht, um die Haftung zwischen den gedrückten Laschenenden und den Lagerstiftenden zu erhöhen.

Bei Variante "e" ist ein Teil 29 auf den Lagerstiftenden als Deckel angebracht und am Fliehgewichtsträger verschweißt, um diese in ihrer Lage zu fixieren.

**Ansprüche**

1. Mechanischer Drehzahlregler für eine Brennkraftmaschine, mit mindestens zwei winkelförmigen Fliehgewichten, welche an einem Fliehgewichtsträger in seitlich hochgezogenen Laschen schwenkbar gelagert sind, und auf eine auf einen Wellenzapfen verschiebbare Reglermuffe wirken,
dadurch gekennzeichnet, daß die Reglermuffe als dünnwandiges Konstruktionsteil ausgebildet ist, das mit den Fliehgewichten in Wirkverbindung steht, daß Abstandshalter (5′, 11) vorgesehen sind, und daß die Reglermuffe an den Enden ihres Schiebesitzes mit umlaufenden Eindrehungen (10) versehen ist.

2. Mechanischer Drehzahlregler nach Anspruch 1, dadurch gekennzeichnet, daß die Reglermuffe aus einem metallischen Teil hergestellt ist.

3. Mechanischer Drehzahlregler nach einem der vorhergehenden Ansprüche,
dadurch gekennzeichnet, daß die Reglermuffe aus verschiedenen Werkstoffen zusammengesetzt ist.

4. Mechanischer Drehzahlregler nach einem der vorhergehenden Ansprüche, dadurch gekennzeichnet, daß die Abstandshalter (5′) an den Fliehgewichten befestigt sind.

5. Mechanischer Drehzahlregler nach einem der vorhergehenden Ansprüche,
dadurch gekennzeichnet, daß die Reglermuffe aus zumindest einem metallischen Teil und einem Kunststoffteil (11), das als Abstandshalter ausgebildet ist, besteht und in Wirkverbindung mit Fliehgewichten mit gebogenen Enden (19, 20, 23, 24, 25) steht, die im Stillstand auf dem Kunststoffteil (11) anliegen.

6. Mechanischer Drehzahlregler nach einem der vorhergehenden Ansprüche,
dadurch gekennzeichnet, daß das Fliehgewicht aus einem Bauteil (19) besteht, das mit einem federnden Element (19′) versehen ist, welches den Lagerstift (8) auf der nicht belasteten Seite des Lagers umschließt.

7. Mechanischer Drehzahlregler nach einem der vorhergehenden Ansprüche,
dadurch gekennzeichnet, daß das Fliehgewicht (23) aus einem leicht verformbaren Werkstoff hergestellt ist und an seiner Lagerstelle abwechselnd so verformt ist, daß es den Lagerstift (8) umschließt.

8. Mechanischer Drehzahlregler nach einem der vorhergehenden Ansprüche,
dadurch gekennzeichnet, daß auf dem Fliehgewicht (20) ein Lagerteil (21) zur Aufnahme eines Lagerstiftes (8) befestigt ist.

9. Mechanischer Drehzahlregler nach einem der vorhergehenden Ansprüche,
dadurch gekennzeichnet, daß das Fliehgewicht (25) aus zwei Blechteilen (22, 22′) hergestellt ist, die miteinander fest verbunden und so geformt sind, daß dazwischen eine Lagerstelle zur Aufnahme des Lagerstiftes (8) entsteht.

10. Mechanischer Drehzahlregler nach einem der vorhergehenden Ansprüche,
dadurch gekennzeichnet, daß das Fliehgewicht aus 2 metallischen und/oder nichtmetallischen Teilen (31', 31") hergestellt ist, die durch axiales Fügen miteinander verbunden sind, und so geformt sind, daß zwischen ihnen eine Lagerstelle zur Aufnahme des Lagerstiftes entsteht, und an der Stelle höherer Belastung (31") verstärkt ausgebildet sind.

11. Mechanischer Drehzahlregler nach einem der vorhergehenden Ansprüche,
dadurch gekennzeichnet, daß die Lagerstelle mit einem Lagerkörper (26) versehen ist.

12. Mechanischer Drehzahlregler nach einem der vorhergehenden Ansprüche,
dadurch gekennzeichnet, daß die am Fliehgewichtsträger (7) zur Aufnahme der Lagerstifte vorgesehenen Laschen einseitig offen sind.

13. Mechanischer Drehzahlregler nach einem der vorhergehenden Ansprüche,
dadurch gekennzeichnet, daß der Lagerstift (8) des Fliehgewichtes durch ein Teil (27, 29), welches am Fliehgewichtsträger (7) befestigt ist, in seiner Lage am Fliehgewichtsträger fixiert ist.

14. Mechanischer Drehzahlregler nach einem der vorhergehenden Ansprüche,
dadurch gekennzeichnet, daß die Lagerstifte an den Laschen des Fliehgewichtsträgers durch Verformen der Laschenenden auf den abgeflachten Enden des Lagerstiftes befestigt sind.

15. Mechanischer Drehzahlregler nach einem der vorhergehenden Ansprüche,
dadurch gekennzeichnet, daß der Fliehgewichtsträger zwischen je zwei benachbarten Fliehgewichten hochgestellte Nasen (30) aufweist.

Fig. 1

KHD-AG, KÖLN                    D 88/035

EP 0 355 844 A2

Fig. 2

KHD-AG, KÖLN

D 88/035

„b„

„a„

Fig. 3

KHD-AG, KÖLN                    D 88/035

Fig. 4

„a"  „b"  „c"  „d"  „e"

KHD-AG, KÖLN          D 88/035